# EUROPEAN PATENT SPECIFICATION

(11) **EP 1 359 585 B1**
(45) Date of publication and mention of the grant of the patent: **14.06.2006**
(21) Application number: 03252671.7
(22) Date of filing: 28.04.2003
(51) Int. Cl.: G11B 31/00, G06F 11/14, H04N 7/00, G06F 11/20

(54) **Multifunction apparatus with operational data protection**
Multifunktionsvorrichtung mit Betriebsdatenschutz
Dispositif à usage multiple avec protection de l' information opérationnel

(30) Priority: 30.04.2002 KR 2002023578
(43) Date of publication of application: 05.11.2003
(73) Proprietor: SAMSUNG ELECTRONICS CO., LTD., Suwon-si, Gyeonggi-do 442-742 (KR)
(72) Inventor: Cho, Byung-hyuk, Paldal-gu, Suwon-city, Gyunggi-do (KR)
(74) Representative: Geary, Stuart Lloyd

(56) References cited:
- EP-A- 0 551 718
- EP-A- 0 718 766
- WO-A-03/010671
- US-A1- 2002 172 495
- US-A1- 2003 014 690

## Description

The present invention relates to an apparatus comprising a first subsystem, including a first controller for controlling its operation, and a second subsystem, including a second controller for controlling its operation and which has a non-volatile memory, and to a method of controlling a system including first and second subsystems.

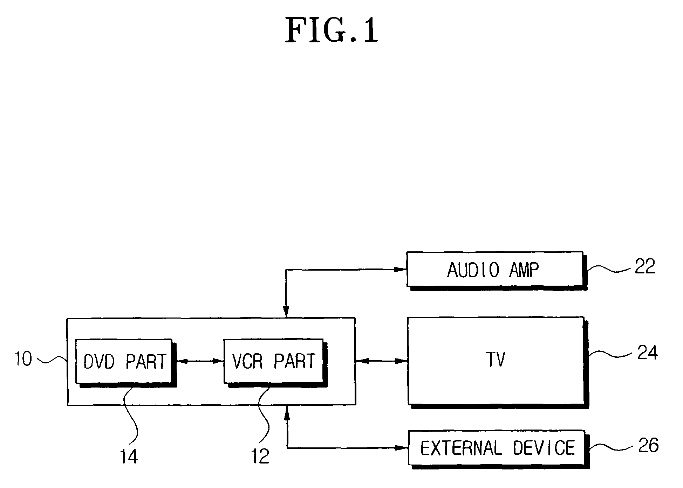

Figure 1 shows an example of a DVD/VCR "combo", or combination, system.

Referring to Figure 1, a DVD/VCR combo system 10 has the VCR part 12 which carries out general VCR functions, and the DVD part 14 which carries out general DVD functions. The general DVD functions include reproducing video and audio recorded on a DVD. In addition to their independent functions, the VCR part 12 and the DVD part 14 may record video and audio signals from the other.

A TV 24 can be connected to the DVD /VCR combo system 10 for displaying images and outputting audio signals reproduced by the VCR part 12 and the DVD part 14. An audio amplifier 22 can be connected to the DVD/VCR combo system 10 as a peripheral device for outputting audio reproduced by the DVD part 14. An external device 26 such as a camcorder can also be connected to the DVD/VCR combo system 10 as a peripheral device. The DVD/VCR combo system 10 can record video and audio signals input from the external device 26 on a magnetic tape and an optical disc by means of the VCR part 12 and the DVD part 14 respectively.

The VCR part 12 and the DVD part 14 in the DVD/VCR combo system 10 have the appearance of a fully integrated system and share the same case. A user can manipulate a separate input device, such as a remote controller (not shown), or buttons of a control panel (not shown) provided on the front of the DVD/VCR combo system 10, so as to switch between the VCR and DVD modes and use the respective functions of the VCR part 12 and the DVD part 14.

In addition to having the DVD part 14 and the VCR part 12 for replaying video and audio data recorded on optical discs and magnetic tapes respectively, the DVD/VCR combo system 10 may have a broadcast reception part (not shown), such as a tuner, for receiving broadcast television signals and outputting the broadcast signals to an external device, such as the TV 24.

In the conventional DVD/VCR combo system 10, when electric power is re-supplied after being cut off due to power failure during playing of an optical disc, the DVD part 14 loads and replays the inserted optical disc from the beginning. Accordingly, while a user may desire to enjoy only the video and/or audio from a portion not retrieved prior to the loss of electric power, the conventional DVD/VCR combo system 10 necessarily requires the user to search from the beginning for the end of the portion retrieved prior to the loss of electric power.

To solve this inconvenience, it has been proposed to continually update the current sector number of an optical disc being played in a non-volatile memory (e.g. an EEPROM) or flash memories. Thus, when electric power is re-supplied after being lost during playing of an optical disc by the DVD part, the DVD part searches for the last sector whose number was stored in the non-volatile memory prior to the loss of electric power.

However, to implement the above method, the conventional DVD/VCR combo system 10 requires a separate non-volatile memory for storing operation states based on a power failure during DVD operations and operation states such as sector numbers of an optical disc. Accordingly, the production cost of the DVD/VCR combo system 10 is raised. In addition, a non-volatile memory mounted to the DVD/VCR combo system 10 has a limited lifespan during which reading and writing of data can be performed. Therefore, a user may have to replace the mounted flash memory after reading and writing have been carried out a certain number of times. Furthermore, since a certain period of time is required to record data into a non-volatile memory, when electric power is lost during recording operation states of the DVD/VCR combo system 10, damage occurs to operational information stored in the non-volatile memory. In such a case, the DVD/VCR combo system 10 cannot be restored to the operation state prior to the loss of electric power when the electric power is re-supplied. For at least the above reasons, the method is not applied to real products that continuously record sector numbers of an optical disc in a non-volatile memory.

An apparatus, according to the present invention, is characterised in that the first controller is configured for sending operation information to the second controller and the second controller is configured for storing operation information received from the first controller in the non-volatile memory and to be responsive to re-establishment of electric power supply to the apparatus to cause the first controller to operate the first subsystem in accordance with operation information, from the first subsystem, stored in the non-volatile memory.

European Patent publication No. 0718766 discloses a method for assuring consistency between data and parity in an access disc array system following a power failure condition which interrupts the execution of one or more disc write I/O₃ operations.

European Patent Publication No. 0551718 discloses a system and method for ensuring write data integrity in a redundant array data storage system. In said system reliable array processing is provided by primary ang secondary array controllers where the completion of data processing is completed by the secondary controller in case of failure of the primary controller.

A method, according to the present invention, is characterised by sending operation information for the first subsystem from the first subsystem to the second subsystem, storing the operation information, received from the first subsystem, in a non-volatile memory of the second subsystem and responding to re-establishment of electric power supply to the apparatus to cause the first subsystem controller to operate the first subsystem in accordance with operation information, from the first subsystem, stored in the non-volatile memory.

Preferred and optional features of the present invention are set forth in claims 2 to 16 and 18 to 21 appended hereto.

An embodiment of the present invention will now be described, by way of example, with reference to Figures 2 to 7 of the accompanying drawings, in which:
Figure 1 is a block diagram of a conventional DVD/VCR combo system;
Figure 2 is a block diagram of a DVD/VCR combo system according to the present invention;
Figure 3 illustrates the contents of the storage part of Figure 2;
Figure 4 is a block diagram of the VCR controller of Figure 2;
Figure 5 is a block diagram of the DVD part of Figure 2;
Figure 6 is a block diagram of the VCR part of Figure 2; and
Figure 7 is a flowchart illustrating the operation of the combo system of Figure 2.

The present invention relates to a system that combines devices having independent functions into one system having control parts which control the operations of respective devices and, in at least one case, store information from the other control part. The system may be provided in one casing which defines the appearance of the system. Accordingly, while a DVD/VCR combo system is described below to illustrate an aspect of the present invention, it is understood that the present invention is not limited to a combo system or a DVD/VCR combo system. Rather, the present invention can be applied to, for example, any system having control parts, corresponding to devices, that can communicate with each other.

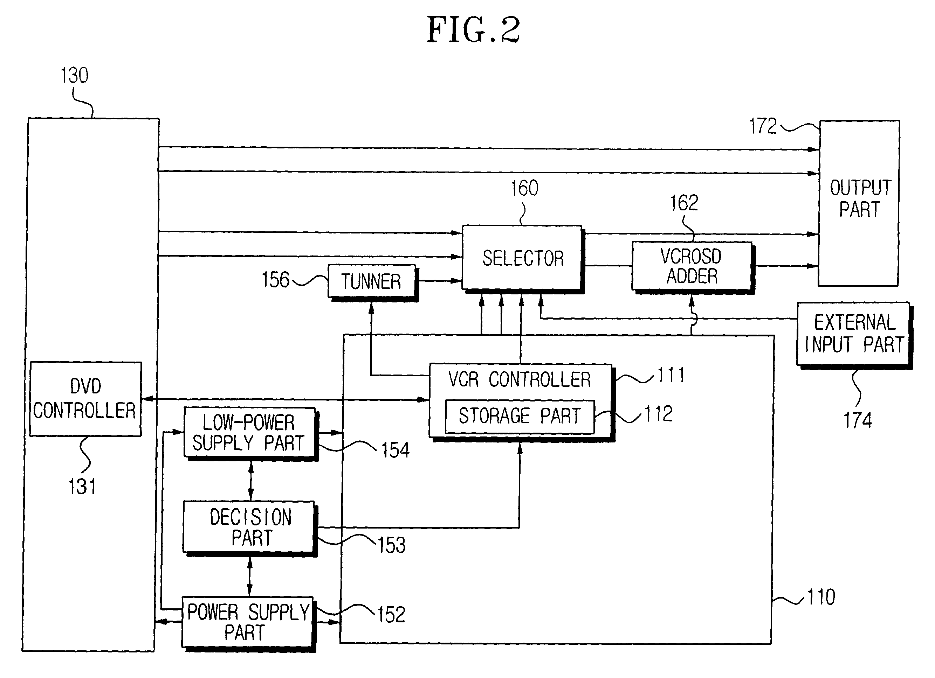

Referring to Figure 2, a DVD/VCR combo system includes a VCR part 110, a DVD part 130, an external input part 174, a tuner 156, a selector 160 and an output part 172.

The VCR part 110 performs general VCR functions, including playing of a magnetic tape and recording to a magnetic tape. The DVD part 130 carries out general DVDP functions, including playing optical recording media such as DVDs and CDs. The DVD part 130 may also be capable of recording data, input from external sources, on optical recording media.

The external input part 174 may be connected to an external device such as a camcorder and receive input audio and video data from the external device. The tuner 156 receives broadcast signals from an antenna (not shown) and/or a cable network (not shown), according to an input tuning command and outputs the received broadcast signal.

The selector 160 selects and outputs a corresponding signal according to an input selection command from signals output from the VCR part 110, DVD part 130 and tuner 156 and a signal transmitted by the external input part 174. The output part 172 outputs signals output from the DVD part 130 and the selector 160 to a peripheral device such as a TV (not shown) and/or an audio amplifier (not shown).

The DVD/VCR combo system further includes a VCR OSD adder 162 that adds a VCR OSD signal to video data output from the selector 160. The VCR OSD signal can be displayed on a screen to provide captions for audio and video data provided and output from the VCR part 110.

The DVD part 130 includes a DVD controller 131 which controls the operations of the DVD part 130 according to input operation commands. The VCR part 110 includes a VCR controller 111 which controls the operations of the VCR part 110 and the DVD controller 131 according to input operation commands. In the present embodiment, while electric power necessary for the operation of the DVD part 130 is supplied, the DVD controller 131 detects operation information of the DVD part 130. Then, the DVD controller 131 transfers the detected operation information to the VCR controller 111.

The VCR controller 111 includes a storage part 112 which stores programs necessary for the control of the DVD/VCR combo system, together with fixed information and edited information edited by a user. The storage part 112 of the VCR controller 111 also stores the operation information from the DVD part 130. The VCR controller 111 may update and store the operation information of the DVD part 130, which is periodically and regularly received, in the storage part 112.

When the electric power necessary for normal operations, such as a playing, recording or the like, by the DVD part 130 and the VCR part 110 is cut off and re-supplied, the VCR controller 111 controls the DVD controller 131 so as to have the DVD part 130, which was disabled by the loss of electric power, continue to operate based on the operation information stored in the storage part 112 before the electric power was cut off. The storage part 112 is integrated with the VCR controller 111 as one module, which can be semi-permanently used together with the VCR controller 111.

The DVD/VCR combo system further includes a power supply part 152, a decision part 153, and a low-power supply part 154. The power supply part 152 receives electric power from a power terminal (not shown), such as a plug, and provides the electric power to the VCR part 110 and the DVD part 130. The VCR part 110 and the DVD part 130 reduce the voltage of the input electric power to voltages suitable for their use.

The decision part 153 determines whether the electric power supplied to the power supply part 152 from the power terminal has been cut off. While the electric power is being supplied to the power supply part 152, energy, sufficient for operating the VCR controller 111 for a short period, is stored by the low-power supply part 154. When the electric power supplied to the power supply part 152 is determined to have been cut off by the decision part 153, the low-power supply part 154 uses the stored energy to operate the VCR controller 111. Accordingly, the storage part 112 can maintain and store the operation information of the DVD part 130 for a short period after the main input electric power is cut off.

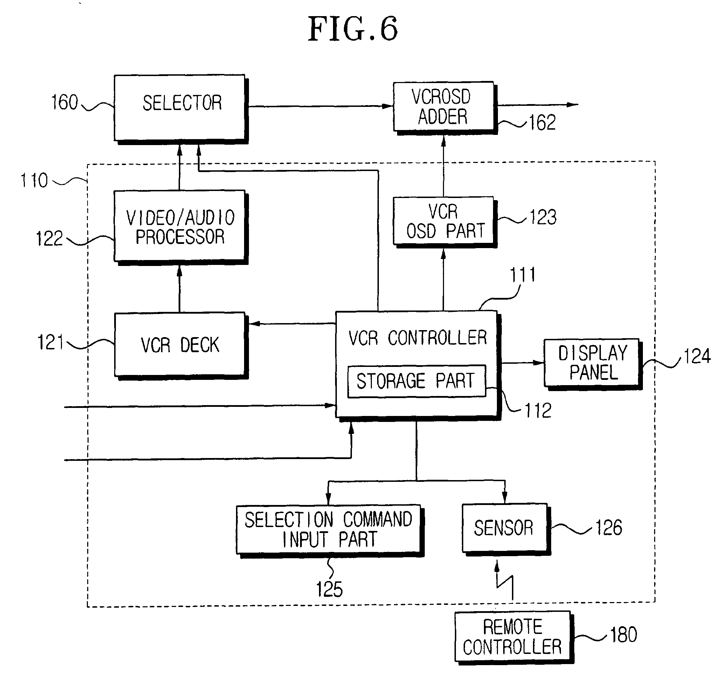

When the decision part 153 determines the electric power has returned after the loss, the VCR controller 111 controls the DVD controller 131 so as to have the DVD part 130, which was disabled due to the loss of electric power, continue to operate based on the operation information stored in the storage part 112. At this time, when the electric power is re-supplied, the VCR controller 111 may control the VCR OSD part (See Figure 6) to display on screen selection information so as to enable a user to select whether to continue the interrupted operation of the DVD part 130 based on the operation information stored in the storage part 112.

Although the storage part 112 is depicted as being inside the VCR controller 111, it is understood that the storage part 112 may be disposed outside the VCR controller 111.

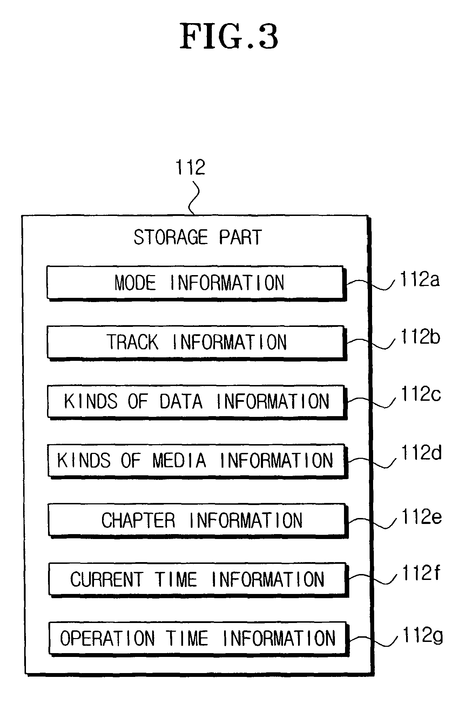

As shown in Figure 3, the operation information includes mode information 112a, track information 112b, kinds of data information 112c, kinds of media information 112d, chapter information 112e, current time information 112f, and operation time information 112g.

The mode information 112a indicates, for example, the mode in which to operate the DVD part 130. The modes available include, for example, an optical recording mode for record data on an optical recording medium, an optical play mode for playing an optical recording medium, an optical load mode for loading data stored on an optical recording medium, based on controls of the DVD controller 131, a search mode for searching for particular data, and a skip mode for previewing data on the optical recording medium.

The track information 112b indicates track numbers of the optical recording medium, which are performed according to an operation mode of the DVD part 130. The kinds of data information 112c defines the kind of data recorded on the optical recording medium or retrieved from the optical recording medium. For example, the kind of data information 112c includes document data, which is text information, based on processing characteristics of data to be recorded or retrieved, program data which is programs, audio data which is audio information, video data which is video information, mixed audio and video data information and booting data which is used to boot the system.

The kinds of media information 112d indicates the kinds of optical recording media. For example, the kinds of media information 112d include DVD information which indicates that optical recording media to be recorded or play are DVDs, and CD information which indicates that optical recording media to be recorded or played are CDs. The chapter information is information grouped and edited in a predetermined format for data recorded on or retrieved from an optical recording medium. When data recorded on an optical recording medium is movie data, that is, mixed data having audio and video content, types of the chapter information 112e include, for example, chapter information to divide the movie data into predetermined units (into folders), chapter information edited to view the summary of the movie data, chapter information edited to view the story of the movie data in text, and chapter information to record information such as the editor's postscript of the movie data.

The current time information 112f is the time set to the DVD/VCR combo system by a user. The operation time information 112g is the operation time at which the DVD part 130 operates as to the optical recording medium.

Accordingly, when the electric power is re-supplied, the VCR controller 111 controls the DVD controller 131 to operate in its operational state prior to the loss of electric power, based on the operation information of the DVD part 130 stored in the storage part 112. Therefore, the DVD part 130 can pick up where it left off and continue to perform the operation as if the loss of the electric power had not occurred.

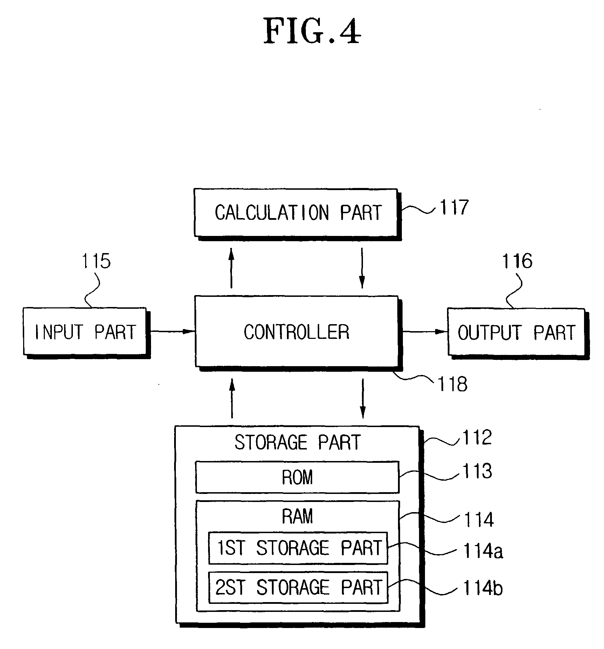

Referring to Figure 4, the input part 115 receives data from an external source. The output part 116 outputs the result of processing the input data. The storage part 112 stores the data input into the input part 115 and the calculation part 117 processes the data input into the input part 115. The controller 118 controls a series of operations of the input part 115, output part 116, storage part 112 and calculation part 117. In the present embodiment, the input part 115 receives information on operations of the DVD part 130. The controller 118 stores the received operation information in the storage part 112. The storage part 112 includes a ROM 113 and a RAM 114. The ROM 113 is loaded with programs and constant data, which are necessary for the operation of the DVD/VCR combo system, during manufacture. The ROM 113 only allows only the initially stored data to be read. The RAM 114 stores data and the like which can be changed, e.g. edited by a user.

The RAM 114 includes a first storage part 114a and a second storage part 114b. In one method operation information of the DVD part 130 first received is stored in the first storage part 114a and then operation information of the DVD part 130 received later is stored in the second storage part 114b. In another method, the first storage part 114a may sequentially store detailed information, in order of reception, until all of the detailed information of the operation information of the DVD part 130 is stored, and where all of the detailed information is received and stored, the operation information of the DVD part 130, having the detailed information, is output to the second storage part 114b based on set times. The second storage part 114b stores the operation information of the DVD part 130 output from the first storage part 114a. In this case, the second storage part 114b updates the stored operation information to newly input operation information when new operation information is output from the first storage part 114a. The VCR controller 111 having the above structure may be manufactured in one module, which is referred to as a microcomputer.

Accordingly, even though the electric power may be cut off during storing and updating of operation information, the loss of the operation information is prevented. Therefore, the DVD part 130 can return to its operational state prior to the loss of electric power even though the electric power have been lost during the storing or updating of the operation information, where the electric power is re-supplied after being cut off.

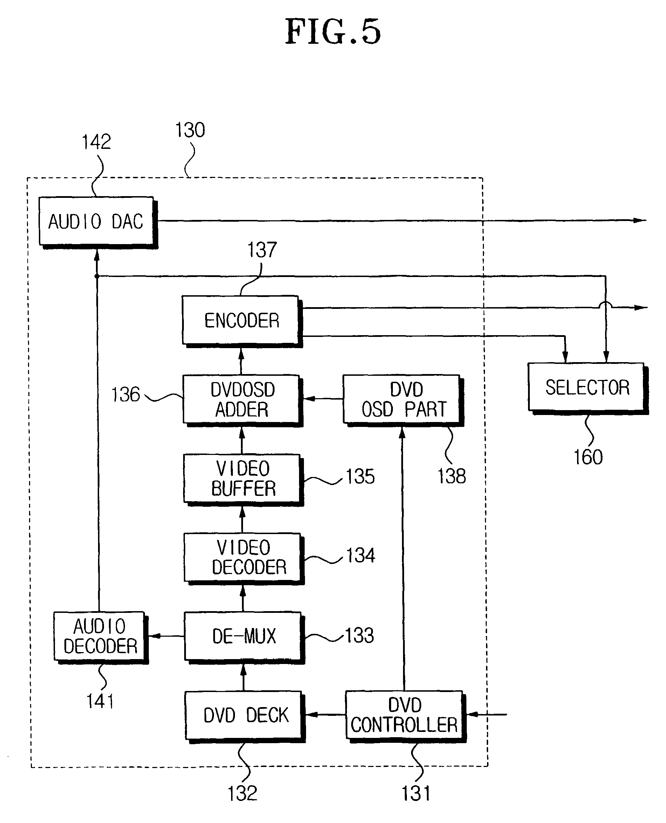

Referring to Figure 5, the DVD part 130 includes a DVD deck 132, a demultiplexer 133, a video decoder 134, a video buffer 135, an audio decoder 141, a DVD OSD part 138, a DVD OSD adder 136, an encoder 137, an audio DAC 142 and the DVD controller 131. All of the above parts except for the DVD controller 131 and the DVD deck 132 can be incorporated in one chip.

The DVD deck 132 reads in data recorded on optical recording media such as DVDs, CDs, and so on. Where an optical recording medium, for example, a DVD, is inserted into and seated on the DVD deck 132, the DVD controller 131 switches the DVD part 130 into play mode and loads and plays the DVD inserted in the DVD deck 132. The DVD controller 131 controls the operation of the DVD deck 132 according to an operation command transferred from the VCR controller 111.

The demultiplexer 133 separates data read from the DVD deck 132 into a video signal and an audio signal. The video decoder 134 and the audio decoder 141 decode and restore compressed video and audio signals from the demultiplexer 133 to original digital video and audio signals. The video buffer 135 stores the video and audio signals and outputs a predetermined amount of video data output from the video decoder 134. For example, the video buffer 135 stores and outputs a predetermined amount of video data sufficient for the display of one frame.

The DVD OSD part 138 stores character data and a variety of symbols for being overlaid on a DVD display and performs the OSD function according to the control of the DVD controller 131. The DVD OSD adder 136 adds video data output from the video buffer 135 and OSD information output from the DVD OSD part 138. The encoder 137 converts a digital video signal into an analogue TV image signal for output. For example, for an image signal is to be output, there are various formats including composite image signal format corresponding to a CVBS and a super video signal comprising Y/C, a component video signal comprising Y/Pb/Pr,.

The audio DAC 142 converts a digital audio signal output from the audio decoder 141 into an analogue audio signal for output. The DVD controller 131 controls the overall operations of the DVD part 130, and the VCR controller 111 controls the DVD controller 131. The DVD controller 131 detects the operational states of the DVD deck 132 and transmits the detected operation information to the VCR controller 111.

Referring to Figure 6, the VCR part 110 includes a VCR deck 121, a video/audio processor 122, the VCR OSD part 123, a VCR controller 111, a display panel 124, and a selection command input part 125.

The VCR deck 121 records data such as sounds and images on magnetic tapes such as video tapes and reads data recorded on the magnetic tapes. Where a magnetic tape is inserted in the VCR deck 121, the VCR controller 111 may switch the VCR 110 into play mode to play the magnetic tape inserted into the VCR deck 121. The video/audio processor 122 processes video and audio signals retrieved from the VCR deck 121 into predetermined signal formats for output.

The VCR OSD part 123 produces OSD information according to the control of the VCR controller 111 for an output to the VCR OSD adder 162. Accordingly, the VCR OSD adder 162 adds an image signal output from the selector 160 and OSD information output from the VCR OSD part 123 for output to the output part 172. Where electric power is re-supplied after being cut off, the VCR controller 111 controls the VCR OSD part 123 to display OSD information selection menus on a screen (not shown), for a user to select whether to continue performing the operation of the DVD part 130, carried out prior to the loss of the electric power, based on the operation information stored in the storage part 112.

The VCR controller 111 controls the overall operations of the VCR part 110 and stores the operation information of the DVD part 130 transferred from the DVD controller 131 in the storage part 112. The VCR controller 111 may detect and store the operational information of the DVD part 130 as well as operation information corresponding to operation states of the VCR part 110. The VCR controller 111 continuously updates and stores the operational information in the storage part 112 when the electric power is supplied to the power supply part 152 of the DVD/VCR combo system. If the electric power is cut off, the VCR controller 111 stores the operation information, stored in the storage part 112, until the electric power returns and, when new operation information of the DVD part 130 is received, updates the stored operation information.

The display panel 124 displays text, numbers, graphics and so on, for a user to recognize operation states and set states of the DVD/VCR combo system, according to the controls of the VCR part 110 and the DVD part 130. The selection command input part 125 is provided with buttons (not shown) for operating the DVD/VCR combo system, receives selection commands and transfers them to the VCR controller 111. The VCR part 110 further includes a sensor 126 which receives various operation commands selected using a remote controller 180. A signal sensed by the sensor 126 is transferred to the VCR controller 111.

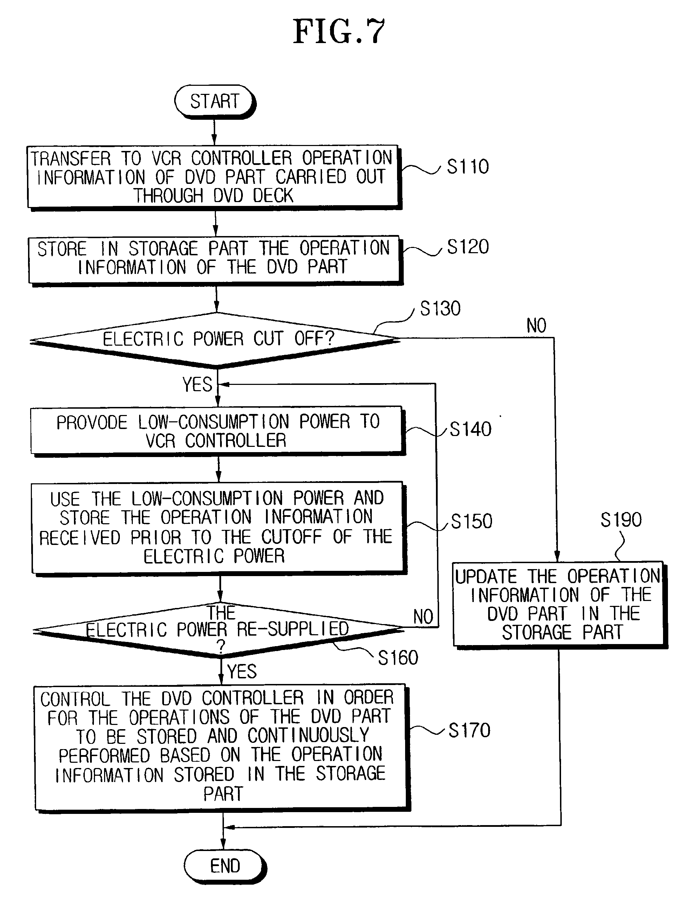

Referring to Figure 7, in operation 1000, the DVD controller 131 detects the operation information of the DVD part 130 and transfers the detected operation information to the VCR controller 111. The VCR controller 111 stores the operation information, transferred from the DVD controller 131, in the storage part 112, in operation 1200. For example, the VCR controller 111 first stores the received operation information in the first storage part 114a, and when new operation information is received, outputs the stored operation information to the second storage part 114b and stores the newly received operation information in the first storage part 114a. The VCR controller 111 stores the operation information output from the first storage part 114a in the second storage part 114b.

In operation 1300, the decision part 153 uses the electric power being supplied to the power supply part 152 to determine whether the electric power, supplied to the power supply part 152 during an operation of the DVD/VCR combo system, has been cut off. When the electric power is determined to be being continuously supplied to the power supply part 152, the VCR controller 111 updates and stores the operation information of the DVD part 130 transmitted from the DVD controller 131 in the storage part 112 at a predetermined interval, in operation 1900. If the electric power supplied to the power supply part 152 is determined to have been cut off in the operation 1300, the low-power supply part 154 uses the electrical energy, stored during the supply of the electric power to the power supply part 152, to power the VCR controller 111 in operation 1400.

The VCR controller 111 uses the stored electrical energy, provided by the low-power supply part 154, to power its the internal operations in operation 1500. The VCR controller 111 may use the stored electrical energy to store the operation information of the DVD part 130, received from the DVD controller 131 prior to the loss of the electric power, in the storage part 112.

In operation 1600, the decision part 153 determines whether the electric power has returned to the power supply part 152 after being cut off. Where the electric power is not re-supplied, the method returns to the operation 1400. Where the electric power is re-supplied to the power supply part 152 in the operation 1600, the VCR controller 111 controls the DVD controller 131 so as to restore and continuously carry out the operations of the DVD part 130, prior to the cutoff of the electric power, based on the operation information stored in the storage part 112, in operation 1700.

Accordingly, where the electric power is re-supplied after being cut off during the operations of the DVD part 130, the VCR controller 111 controls the DVD controller 131 to restore and continue the operations of the DVD part 130 based on the operation information stored in the storage part 112, to thereby eliminate the inconvenience associated with the cutoff of the electric power while the DVD part 130 is in use. Furthermore, the storage part 112 can be semi-permanently used to store the operation information using the low power supplied from the low-power supply part 154, unlike flash memories, EEPROMs, and so on used by a conventional DVD/VCR combo system having a shortened lifespan in comparison.

Although the present invention has been described with respect to the operation information of the DVD part 130, it is understood that the present invention can detect and store operation information of the DVD part 130 and the VCR part 110. That is, respective operations of the DVD part 130 and the VCR part 110 can be continuously performed, prior to the cutoff of the electric power, based on respectively stored operation information of the DVD part 130 and the VCR part 110 upon re-supply of the electric power after the cutoff.

The present invention stores, for example, the operation information of the DVD part in the storage part 112 provided in the VCR controller. Accordingly, a separate storage part to store the operation information of the DVD part is not needed. Therefore, inconvenience of adding an additional storage part and cost related to thereof can be avoided.

In the present invention, a storage part provided inside a VCR controller can be semi-permanently used to store operation information. Therefore, an inconvenience can be avoided which is associated with the use of flash memories or EEPROMs having a shortened lifespan in comparison (number of times data can be recorded to store operation information).

The present invention stores initially received operation information in a first storage part, updates it with newly received operation information in the first storage part, and updates and stores the initially received operation information stored in the first storage part in the second storage part. Accordingly, operational states can be restored even if electric power is cutoff at the instance where the operation information is being updated.

Finally, while a DVD/VCR combo system has been described, it is understood that the present invention can be applied to a mono system having first and second device parts, wherein operation information of the first device part is stored in a storage part of the second device part.

## Claims

1. An apparatus comprising a first subsystem (130), including a first controller (131) for controlling its operation, and a second subsystem (110), including a second controller (111) for controlling its operation and which has a non-volatile memory (112), **characterised in that** the first controller (131) is configured for sending operation information to the second controller (111) and the second controller (111) is configured for storing operation information received from the first controller (131) in the non-volatile memory (112) and to be responsive to re-establishment of electric power supply to the apparatus to cause the first controller (131) to operate the first subsystem (130) in accordance with operation information, from the first subsystem (130), stored in the non-volatile memory (112).

2. An apparatus according to claim 1, comprising:
a power supply part (152) which supplies electric power to the first and second subsystems (130, 110);
a decision part (153) which determines whether the supply of electric power to the apparatus has been interrupted; and
a low-power supply part (154) which is charged while electric power is being supplied to the apparatus and supplies the low-consumption power to the second controller (111) in response to the supply of electric power to the apparatus being interrupted.

3. An apparatus according to claim 1 or 2, wherein said second controller (111) is configured to be responsive to re-establishment of electric power supply to the apparatus to cause the first controller (131) to operate the first subsystem (130) so as to restore and/or continue its operational state prior to the interruption of the electric power supply.

4. An apparatus according to claim 1, 2 or 3, wherein the storage part comprises first and second storage areas (114a, 114b) and operation information from the first controller (131) is initially stored the first storage area (114a) and then transferred to the second storage area (114b).

5. An apparatus according to claim 4, wherein the second controller (111) is configured to transfer the operation information from the first storage area (114a) to the second storage area (114b) at predetermined time intervals.

6. An apparatus according to claim 4 or 5, wherein the second controller (111) is responsive to re-establishment of electric power supply to the apparatus to send control signals to the first controller (131) to cause it to operate the first subsystem (130) in accordance with operation information, from the first subsystem (130), stored in the second storage area (114b).

7. An apparatus according to claim 1, 2 or 3, wherein the storage part comprises first and second storage areas (114a, 114b) and operation information from the first controller (131) is alternately stored the first storage area (114a) and the second storage area (114b).

8. An apparatus according to any preceding claim, wherein the first subsystem (130) is a DVD part.

9. An apparatus according to any preceding claim, wherein the first and second subsystems (110, 130) are players/recorders for respective different recording media types.

10. An apparatus according to any preceding claim, comprising an OSD part (162) which displays on-screen selection information to determine whether to continue to operate the first subsystem (130) in its operational state prior to the interruption of the supply of electric power to the apparatus, in response to the re-establishment of the supply of electric power to the apparatus.

11. An apparatus according to claim 1, comprising a low-power supply part (154) which provides low-consumption power to maintain the operation information in the non-volatile memory (112), when the supply of electric power to the apparatus is interrupted.

12. An apparatus according to any preceding claim, wherein:
the first subsystem (130) is a player for a plurality of types of optical recording media, and
the operation information of the first subsystem (130) includes:
mode information (112a) which indicates the mode in which the first subsystem (130) is operating,
track information (112b) which indicates track numbers carried on an optical recording medium, operated by the first subsystem (130), according to the modes,
data information (112c) which indicates kind of data being recorded on or reproduced from the optical recording medium,
current time (112f) information which is the time provided to the system,
operation time information (112g) which is the operation time for which the first subsystem (130) has operated with the optical recording medium,
chapter information (112e) which is information grouped and edited in a predetermined format for the data, and
media information (112d) which indicates the format-type of the optical recording medium.

13. An apparatus according to claim 12, wherein:
the mode information (112a) includes a record mode to record the data on the optical recording medium, a reproduction mode to reproduce the data from the optical recording medium on which the data is stored, a load mode to load the data, a search mode to search for particular data, and a skip mode to skip to the data recorded on the optical recording medium according to commands of the control part,
the data information (112c) includes document data, program data, audio data, video data, data mixed with the audio data and the video data, and booting data, and
the format-type (112d) of the optical recording medium includes a DVD and a CD.

14. An apparatus according to any preceding claim 1, comprising:
an external input part (174) for receiving a signal from an external device outside of the system;
a tuner (156) for receiving a broadcast signal from outside of the system;
a selector (160) for selectively outputting signals from one or more of the first subsystem (130), second subsystem (110), the external input part (174) and the tuner (156);
an output part (172) for providing the selected signal, output form the selector, and a signal output from the first device part; and
a OSD adder (162) for adding a caption signal from the second subsystem (130) to image data output from the selector (160).

15. An apparatus according to any preceding claim, wherein the non-volatile memory (112) is provided in the first controller (111).

16. An apparatus according to any preceding claim, wherein the system is provided in one casing.

17. A method of controlling a system including first and second subsystems (130, 110), **characterised by** sending operation information for the first subsystem (130) from the first subsystem (130) to the second subsystem (110), storing the operation information, received from the first subsystem (130), in a non-volatile memory (112) of the second subsystem (110) and responding to re-establishment of electric power supply to the apparatus to cause the first subsystem controller (131) to operate the first subsystem (130) in accordance with operation information, from the first subsystem (130), stored in the non-volatile memory (112).

18. A method according to claim 17, comprising, on re-establishment of electrical power supply to the apparatus:
displaying on-screen selection information to determine whether to operate the first subsystem (130) in the operational state it was in prior to the interruption in the supply of electric power to the apparatus; and
if an input signal indicating that the first subsystem (130) should be returned to its former state, operating the first subsystem (130) according to the operation information stored in the non-volatile memory (112).

19. A method according to claim 17, wherein the storing of the operation information includes updating the operation information with current operation information of the first subsystem (130) at predetermined time intervals.

20. A method according to claim 17, wherein the non-volatility of the non-volatile memory (112) is provided by powering the non-volatile memory (112) using a low-consumption power supply (154) in response to the supply of electric power to the apparatus being interrupted.

21. A method according to claim 20, further comprising the charging low-consumption power while electric power is being supplied to the apparatus.

## Patentansprüche

1. Eine Vorrichtung, umfassend ein erstes Teilsystem (130), das eine erste Steuervorrichtung (131) zum Steuern seines Betriebs enthält, und ein zweites Teilsystem (110), das eine zweite Steuervorrichtung (111) zum Steuern seines Betriebs enthält und das einen nicht-flüchtigen Speicher (112) hat, **gekennzeichnet dadurch, dass** die erste Steuervorrichtung (131) konfiguriert ist zum Senden von Betriebsinformation zu der zweiten Steuervorrichtung (111), und die zweite Steuervorrichtung (111) konfiguriert ist zum Speichern von Betriebsinformation, die von der ersten Steuervorrichtung (131) empfangen wird, in dem nicht-flüchtigen Speicher (112), und um auf Wiederherstellung einer elektrischen Leistungsversorgung zu der Vorrichtung zu reagieren, um die erste Steuervorrichtung (131) zu veranlassen, das erste Teilsystem (130) in Übereinstimmung mit Betriebsinformation zu betreiben, von dem ersten Teilsystem (130), die in dem nicht-flüchtigen Speicher (112) gespeichert ist.

2. Eine Vorrichtung nach Anspruch 1, umfassend:
einen Leistungsversorgungsteil (152), der elektrische Leistung zu den ersten und zweiten Teilsystemen (130, 110) zuführt;
einen Entscheidungsteil (153), der bestimmt, ob die Zufuhr elektrischer Leistung zu der Vorrichtung unterbrochen wurde; und
einen Niederleistungsversorgungsteil (154), der geladen wird, während der Vorrichtung elektrische Leistung zugeführt wird, und die Niederverbrauchsleistung zu der zweiten Steuervorrichtung (111) als Reaktion darauf, dass die Zufuhr elektrischer Leistung zu der Vorrichtung unterbrochen ist, zuführt.

3. Eine Vorrichtung nach Anspruch 1 oder 2, wobei die zweite Steuervorrichtung (111) konfiguriert ist, auf Wiederherstellung der elektrischen Leistungsversorgung zu der Vorrichtung zu reagieren, um die erste Steuervorrichtung (131) zu veranlassen, das erste Teilsystem (130) so zu betreiben, um seinen Betriebszustand vor der Unterbrechung der elektrischen Leistungsversorgung wiederherzustellen und/oder fortzusetzen.

4. Eine Vorrichtung nach Anspruch 1, 2 oder 3, wobei der Speicherteil erste und zweite Speicherbereiche (114a, 114b) umfasst und Betriebsinformation von der ersten Steuervorrichtung (131) anfangs in dem ersten Speicherbereich (114a) gespeichert wird und dann zu dem zweiten Speicherbereich (114b) transferiert wird.

5. Eine Vorrichtung nach Anspruch 4, wobei die zweite Steuervorrichtung (111) konfiguriert ist, die Betriebsinformation von dem ersten Speicherbereich (114a) zu dem zweiten Speicherbereich (114b) in vorbestimmten Zeitintervallen zu transferieren.

6. Eine Vorrichtung nach Anspruch 4 oder 5, wobei die zweite Steuervorrichtung (111) auf Wiederherstellung der elektrischen Leistungsversorgung zu der Vorrichtung reagiert, um Steuersignale zu der ersten Steuervorrichtung (131) zu senden, um sie zu veranlassen, das erste Teilsystem (130) in Übereinstimmung mit Betriebsinformation zu betreiben, von dem ersten Teilsystem (130), die in dem zweiten Speicherbereich (114b) gespeichert ist.

7. Eine Vorrichtung nach Anspruch 1, 2 oder 3, wobei der Speicherteil erste und zweite Speicherbereiche (114a, 114b) umfasst und Betriebsinformation von der ersten Steuervorrichtung (131) abwechselnd in dem ersten Speicherbereich (114a) und dem zweiten Speicherbereich (114b) gespeichert wird.

8. Eine Vorrichtung nach einem beliebigen vorangehenden Anspruch, wobei das erste Teilsystem (130) ein DVD-Teil ist.

9. Eine Vorrichtung nach einem beliebigen vorangehenden Anspruch, wobei die ersten und zweiten Teilsysteme (110, 130) Abspielgeräte/Aufzeichnungsgeräte für jeweilige unterschiedliche Typen von Aufzeichnungsmedien sind.

10. Eine Vorrichtung nach einem beliebigen vorangehenden Anspruch, umfassend einen OSD-Teil (162), der Bildschirm-Auswahlinformation anzeigt um zu bestimmen, ob ein Betrieb des ersten Teilsystems (130) in seinem Betriebszustand vor der Unterbrechung der Zufuhr elektrischer Leistung zu der Vorrichtung fortzusetzen ist, als Reaktion auf die Wiederherstellung der Zufuhr elektrischer Leistung zu der Vorrichtung.

11. Eine Vorrichtung nach Anspruch 1, umfassend einen Niederleistungsversorgungsteil (154), der Niederverbrauchsleistung vorsieht, um die Betriebsinformation in dem nicht-flüchtigen Speicher (112) zu unterhalten, wenn die Zufuhr elektrischer Leistung zu der Vorrichtung unterbrochen ist.

12. Eine Vorrichtung nach einem beliebigen vorangehenden Anspruch, wobei:
das erste Teilsystem (130) ein Abspielgerät für eine Vielzahl von Typen optischer Aufzeichnungsmedien ist, und
die Betriebsinformation des ersten Teilsystems (130) enthält:
Modusinformation (112a), die den Modus anzeigt, in dem das erste Teilsystem (130) arbeitet,
Spureninformation (112b), die Spurennummern anzeigt, die auf einem optischen Aufzeichnungsmedium aufgenommen sind, das durch das erste Teilsystem (130) betrieben wird, gemäß den Modi,
Dateninformation (112c), die die Art von Daten anzeigt, die aufgezeichnet werden auf oder wiedergegeben werden von dem optischen Aufzeichnungsmedium,
Information der aktuellen Zeit (112f), die die Zeit ist, die dem System bereitgestellt wird,
Betriebszeitinformation (112g), die die Betriebszeit ist, für welche das erste Teilsystem (130) mit dem optischen Aufzeichnungsmedium gearbeitet hat,
Kapitelinformation (112e), die Information ist, die in einem vorbestimmten Format für die Daten gruppiert und editiert wird, und
Medieninformation (112d), die den Formattyp des optischen Aufzeichnungsmediums anzeigt.

13. Eine Vorrichtung nach Anspruch 12, wobei:
die Modusinformation (112a) einschließt einen Aufzeichnungsmodus, um die Daten auf dem optischen Aufzeichnungsmedium aufzuzeichnen, einen Wiedergabemodus, um die Daten von dem optischen Aufzeichnungsmedium wiederzugeben, auf dem die Daten gespeichert sind, einen Lademodus, um die Daten zu laden, einen Suchmodus, um nach bestimmten Daten zu suchen, und einen Sprungmodus, um zu den Daten, die auf dem optischen Aufzeichnungsmedium aufgezeichnet sind, gemäß Befehlen des Steuerteils zu springen,
die Dateninformation (112c) Dokumentendaten, Programmdaten, Audiodaten, Videodaten, Daten, die mit den Audiodaten und den Videodaten gemischt sind, und Hochfahrdaten enthält, und
der Formattyp (112d) des optischen Aufzeichnungsmediums eine DVD und eine CD enthält.

14. Eine Vorrichtung nach einem beliebigen vorangehenden Anspruch 1, umfassend:
einen externen Eingangsteil (174) zum Empfangen eines Signals von einer externen Einrichtung außerhalb des Systems;
einen Tuner (156) zum Empfangen eines Rundfunksignals von außerhalb des Systems;
einen Selektor (160) zum selektiven Ausgeben von Signalen von einem oder mehr von dem ersten Teilsystem (130), dem zweiten Teilsystem (110), dem externen Eingangsteil (174) und dem Tuner (156);
einen Ausgangsteil (172) zum Bereitstellen des ausgewählten Signals, das von dem Selektor ausgegeben wird, und eines Signals, das von dem ersten Einrichtungsteil ausgegeben wird; und
einen OSD-Addierer (162) zum Addieren eines Titelsignals von dem zweiten Teilsystem (130) zu Bilddaten, die von dem Selektor (160) ausgegeben werden.

15. Eine Vorrichtung nach einem beliebigen vorangehenden Anspruch, wobei der nicht-flüchtige Speicher (112) in der ersten Steuervorrichtung (111) vorgesehen ist.

16. Eine Vorrichtung nach einem beliebigen vorangehenden Anspruch, wobei das System in einem Gehäuse vorgesehen ist.

17. Ein Verfahren zum Steuern eines Systems, das erste und zweite Teilsysteme (130, 110) enthält, **gekennzeichnet durch** Senden von Betriebsinformation für das erste Teilsystem (130) von dem ersten Teilsystem (130) zu dem zweiten Teilsystem (110), Speichern der Betriebsinformation, die von dem ersten Teilsystem (130) empfangen wird, in einem nicht-flüchtigen Speicher (112) des zweiten Teilsystems (110), und Reagieren auf Wiederherstellung elektrischer Leistungsversorgung zu der Vorrichtung, um die erste Teilsystem-Steuervorrichtung (131) zu veranlassen, das erste Teilsystem (130) in Übereinstimmung mit Betriebsinformation zu betreiben, von dem ersten Teilsystem (130), die in dem nicht-flüchtigen Speicher (112) gespeichert ist.

18. Ein Verfahren nach Anspruch 17, umfassend, bei Wiederherstellung der elektrischen Leistungsversorgung zu der Vorrichtung:
Anzeigen von Bildschirm-Auswahlinformation um zu bestimmen, ob das erste Teilsystem (130) in dem Betriebszustand zu betreiben ist, in dem es vor der Unterbrechung in der Zufuhr elektrischer Leistung zu der Vorrichtung gewesen ist; und
falls ein Eingangssignal, das anzeigt, dass das erste Teilsystem (130) zu seinem vorherigen Zustand zurückgeführt werden sollte, Betreiben des ersten Teilsystems (130) gemäß der Betriebsinformation, die in dem nicht-flüchtigen Speicher (112) gespeichert ist.

19. Ein Verfahren nach Anspruch 17, wobei das Speichern der Betriebsinformation Aktualisieren der Betriebsinformation mit aktueller Betriebsinformation des ersten Teilsystems (130) in vorbestimmten Zeitintervallen einschließt.

20. Ein Verfahren nach Anspruch 17, wobei die Nicht-Flüchtigkeit des nicht-flüchtigen Speichers (112) durch Speisen des nicht-flüchtigen Speichers (112) unter Verwendung einer Niederverbrauchsleistungsversorgung (154) als Reaktion darauf vorgesehen wird, dass die Zufuhr elektrischer Leistung zu der Vorrichtung unterbrochen ist.

21. Ein Verfahren nach Anspruch 20, ferner umfassend das Laden von Niederverbrauchsleistung, während der Vorrichtung elektrische Leistung zugeführt wird.

## Revendications

1. Appareil comprenant un premier sous-système (130), comprenant un premier dispositif de commande (131) pour commander son fonctionnement, et un second sous-système (110), comprenant un second dispositif de commande (111) pour commander son fonctionnement et qui a une mémoire non volatile (112), **caractérisé en ce que** le premier dispositif de commande (131) est configuré pour envoyer des informations opérationnelles au second dispositif de commande (111) et le second dispositif de commande (111) est configuré pour stocker les informations opérationnelles reçues depuis le premier dispositif de commande (131) dans la mémoire non volatile (112) et être réactif au rétablissement de l'alimentation électrique de l'appareil pour faire actionner le premier sous-système (130) par le premier dispositif de commande (131) conformément aux informations opérationnelles, provenant du premier sous-système (130), stockées dans la mémoire non volatile (112).

2. Appareil selon la revendication 1, comprenant :
un composant d'alimentation (152) qui fournit de l'énergie électrique aux premier et second sous-systèmes (130, 110) ;
un composant de décision (153) qui détermine si l'alimentation en énergie électrique de l'appareil a été interrompue ; et
un composant d'alimentation à basse puissance (154) qui est chargée tandis que l'énergie électrique est fournie à l'appareil et fournit l'énergie à basse consommation au second dispositif de commande (111) en réponse à l'alimentation en énergie électrique de l'appareil entrain d'être interrompue.

3. Appareil selon la revendication 1 ou 2, dans lequel ledit second dispositif de commande (111) est configuré pour être réactif au rétablissement de l'alimentation électrique de l'appareil pour faire actionner le premier sous-système (130) par le premier dispositif de commande (131) de manière à restaurer et/ou maintenir son état de fonctionnement avant l'interruption de l'alimentation électrique.

4. Appareil selon la revendication 1, 2 ou 3, dans lequel le composant de stockage comprend des première et seconde zones de stockage (114a, 114b) et les informations opérationnelles provenant du premier dispositif de commande (131) sont initialement stockées dans la première zone de stockage (114a) puis transférées jusqu'à la seconde zone de stockage (114b).

5. Appareil selon la revendication 4, dans lequel le second dispositif de commande (111) est configuré de manière à transférer les informations opérationnelles de la première zone de stockage (114a) jusqu'à la seconde zone de stockage (114b) à des intervalles de temps prédéterminés.

6. Appareil selon la revendication 4 ou 5, dans lequel le second dispositif de commande (111) est réactif au rétablissement de l'alimentation électrique de l'appareil de manière à envoyer des signaux de commande au premier dispositif de commande (131) pour faire actionner par celui-ci le premier sous-système (130) conformément aux informations opérationnelles, provenant du premier sous-système (130), stockées dans la seconde zone de stockage (114b).

7. Appareil selon la revendication 1, 2 ou 3, dans lequel le composant de stockage comprend des première et seconde zones de stockage (114a, 114b) et les informations opérationnelles provenant du premier dispositif de commande (131) sont alternativement stockées dans la première zone de stockage (114a) et la seconde zone de stockage (114b).

8. Appareil selon l'une quelconque des revendications précédentes, dans lequel le premier sous-système (130) est une partie de DVD.

9. Appareil selon l'une quelconque des revendications précédentes, dans lequel les premier et second sous-systèmes (110, 130) sont des lecteurs/enregistreurs pour des types de support d'enregistrement différents respectifs.

10. Appareil selon l'une quelconque des revendications précédentes, comprenant un composant de lecteur optique (162) qui affiche à l'écran des informations de sélection pour déterminer s'il faut continuer à faire fonctionner le premier sous-système (130) dans son état opérationnel avant l'interruption de l'alimentation électrique de l'appareil, en réponse au rétablissement de l'alimentation électrique de l'appareil.

11. Appareil selon la revendication 1, comprenant un composant d'alimentation à basse puissance (154) qui fournit de l'énergie à basse consommation pour maintenir les informations opérationnelles dans la mémoire non volatile (112), lorsque l'alimentation d'énergie électrique de l'appareil est interrompue.

12. Appareil selon l'une quelconque des revendications précédentes, dans lequel :
le premier sous-système (130) est un lecteur pour une pluralité de types de supports d'enregistrement optique, et
les informations opérationnelles du premier sous-système (130) comprennent :
des informations de mode (112a) qui indiquent le mode dans lequel le premier sous-système (130) fonctionne,
des informations de piste (112b) qui indiquent les numéros de piste portés sur un support d'enregistrement optique, actionné par le premier sous-système (130), conformément aux modes,
des informations de données (112c) qui indiquent le type de données entrain d'être enregistrées sur ou reproduites depuis le support d'enregistrement optique,
des informations d'heure actuelle (112f) qui est l'heure fournie par le système,
des informations de temps de fonctionnement (112g) qui est le temps de fonctionnement durant lequel le premier sous-système (130) a fonctionné avec le support d'enregistrement optique,
des informations de chapitre (112e) qui sont des informations groupées et éditées dans un format prédéterminé pour les données, et
des informations de support (112d) qui indiquent le format-type du support d'enregistrement optique.

13. Appareil selon la revendication 12, dans lequel :
les informations de mode (112a) comprennent un mode d'enregistrement pour enregistrer les données sur le support d'enregistrement optique, un mode de reproduction pour reproduire les données depuis le support d'enregistrement optique sur lequel les données sont stockées, un mode de chargement pour charger les données, un mode de recherche pour rechercher des données particulières, et un mode de saut pour sauter jusqu'aux données enregistrées sur le support d'enregistrement optique conformément aux commandes du composant de commande,
les informations de données (112c) comprennent des données de document, des données de programme, des données audio, des données vidéo, des données mixées avec les données audio et les données vidéo, et des données d'amorçage, et
le format-type (112d) du support d'enregistrement optique comprend un DVD et un CD.

14. Appareil selon une revendication précédente quelconque 1, comprenant :
une partie d'entrée externe (174) pour recevoir un signal depuis un dispositif externe à l'extérieur du système ;
un tuner (156) pour recevoir un signal de diffusion depuis l'extérieur du système ;
un sélecteur (160) pour délivrer sélectivement en sortie des signaux depuis l'un ou plusieurs parmi le premier sous-système (130), le second sous-système (110), le composant d'entrée externe (174) et le tuner (156) ;
un composant de sortie (172) pour fournir le signal sélectionné, en sortie du sélecteur, et un signal de sortie provenant du premier composant du dispositif ; et
un additionneur de lecteur optique (162) pour ajouter un signal de sous-titre provenant du second sous-système (130) aux données d'image en sortie du sélecteur (160).

15. Appareil selon l'une quelconque des revendications précédentes, dans lequel la mémoire non volatile (112) est disposée dans le premier dispositif de commande (111).

16. Appareil selon l'une quelconque des revendications précédentes, dans lequel le système est disposé dans un boîtier.

17. Procédé de commande d'un système comprenant des premier et second sous-systèmes (130, 110) **caractérisé par** l'envoi d'informations opérationnelles pour le premier sous-système (130) du premier sous-système (130) au second sous-système (110), le stockage des informations opérationnelles, reçues depuis le premier sous-système (130), dans une mémoire non volatile (112) du second sous-système (110) et la réponse au rétablissement de l'alimentation électrique de l'appareil de manière à faire actionner le premier sous-système (130) par le dispositif de commande (131) du premier sous-système conformément aux informations opérationnelles, provenant du premier sous-système (130), stockées dans la mémoire non volatile (112).

18. Procédé selon la revendication 17, comprenant, lors du rétablissement de l'alimentation électrique de l'appareil les étapes consistant à :
Afficher à l'écran des informations de sélection pour déterminer s'il faut actionner le premier sous-système (130) dans l'état opérationnel dans lequel il était avant l'interruption de l'alimentation électrique de l'appareil ; et
si un signal d'entrée indique que le premier sous-système (130) doit être retourné à son état antérieur, faire fonctionner le premier sous-système (130) conformément aux informations opérationnelles stockées dans la mémoire non volatile (112).

19. Procédé selon la revendication 17, dans lequel le stockage des informations opérationnelles comprend la mise à jour des informations opérationnelles avec les informations opérationnelles actuelles du premier sous-système (130) à des intervalles de temps prédéterminés.

20. Procédé selon la revendication 17, dans lequel la non volatilité de la mémoire non volatile (112) est réalisée en alimentant la mémoire non volatile (112) en utilisant une alimentation à basse consommation (154) en réponse à l'alimentation électrique de l'appareil en cours d'interruption.

21. Procédé selon la revendication 20, comprenant en outre l'étape consistant à charger l'alimentation à basse consommation tandis que l'énergie électrique est fournie à l'appareil.
